# EUROPÄISCHE PATENTSCHRIFT

(11) **EP 3 459 170 B1**
(45) Veröffentlichungstag und Bekanntmachung des Hinweises auf die Patenterteilung: **25.03.2020**
(21) Anmeldenummer: 17734700.2
(22) Anmeldetag: 27.06.2017
(51) Int. Cl.: H02M 7/00, H02G 5/00

(54) **VORRICHTUNG ZUR ELEKTRISCHEN VERBINDUNG VON MINDESTENS EINEM ELEKTRISCHEN BAUELEMENT MIT EINER ERSTEN UND ZWEITEN STROMSCHIENE**
DEVICE FOR THE ELECTRICAL CONNECTION OF AT LEAST ONE ELECTRICAL COMPONENT WITH A FIRST AND A SECOND BUSBAR
DISPOSITIF DE RACCORDEMENT ELECTRIQUE D'AU MOINS UN ELEMENT DE CONSTRUCTION ELECTRIQUE ET UNE PREMIERE ET UNE SECONDE BARRETTE DE CONNEXION

(30) Priorität: 07.07.2016 EP 16178299
(43) Veröffentlichungstag der Anmeldung: 27.03.2019
(73) Patentinhaber: Siemens Aktiengesellschaft, 80333 München (DE)
(72) Erfinder: NIEBERLEIN, Klaus, 90471 Nürnberg (DE); OCHS, Ewgenij, 90765 Fürth (DE)
(86) Internationale Anmeldenummer: PCT/EP2017/065828
(87) Internationale Veröffentlichungsnummer: WO 2018/007202

(56) Entgegenhaltungen:
- EP-A1- 1 311 045
- EP-A2- 1 120 895
- DE-A1- 19 717 550

## Beschreibung

Die Erfindung betrifft eine Vorrichtung zum elektrischen Verbinden von mindestens einem elektrischen Bauelement mit einer ersten und zweiten Stromschiene, welche im elektrischen Betrieb zueinander ein unterschiedliches Potential aufweisen. Die Erfindung betrifft weiterhin einen Stromrichter mit der Vorrichtung.

In Stromrichtern größerer Leistungen kommen für die elektrische Energieübertragung am Gleichspannungskreis im Allgemeinen Stromschienen größeren Querschnitts und größerer Oberfläche zum Einsatz, welche eine elektrische Anbindung von elektrischen bzw. elektronischen Bauteilen an den Gleichspannungskreis ermöglichen. Aus Gründen der Umgebungsbedingungen sind einer großzügigen räumlichen Anordnung der Stromschienen und der elektrischen Bauelemente jedoch meist enge Grenzen gesetzt. Auch sich unmittelbar gegenüberliegende Stromschienen mit einem jeweils unterschiedlichen Potential, bei Gleichspannungssystemen ein positives Potential gegenüber einem negativen Potential, werden oft in geringem Abstand zueinander angeordnet.

Je geringer der Abstand zwischen Stromschienen mit im Betrieb jeweils unterschiedlichen Potentialen gewählt wird, umso größer ist die Gefahr, dass aufgrund von unzureichend ausgelegten Luft- bzw. Kriechstrecken zwischen den beiden Stromschienen ein Kurzschluss in Form eines Spannungsüberschlags auftritt. Die Luftstrecke im elektrischen Kontext bezeichnet im Allgemeinen die kürzeste Entfernung zwischen zwei elektrischen Leitern (Stromschienen) unterschiedlichen Potentials, die Kriechstrecke im elektrischen Kontext beschreibt meist die kürzeste Entfernung entlang der Oberfläche eines festen Isoliermittels zwischen zwei elektrischen Leitern (Stromschienen).

In bekannter Weise können derartige Spannungsüberschläge durch das Einbringen einer elektrischen Isolation zwischen den beiden Stromschienen verhindert werden. Die Auswahl des Isolationsmediums und die Dimensionierung dieser elektrischen Isolation erfolgt meist auf Basis von entsprechenden Normen und Standards unter Berücksichtigung von Art und Höhe der im Betrieb auftretenden Spannung sowie der konstruktiven Anordnung der sich gegenüberliegenden Stromschienen. Für Stromschienen mit geringem Abstand zueinander werden beispielsweise elektrisch isolierende Folien eingesetzt, welche die Stromschienen gegeneinander elektrisch isolieren.

Die elektrische Verbindung eines elektrischen Bauelements mit zwei sich gegenüberliegenden Stromschienen kann beispielsweise mittels zweier Anschlussbolzen erfolgen, welche Teil des elektrischen Bauelements sind. Diese Anschlussbolzen erfordern eine Anschlussöffnung der ersten Stromschiene und eine Durchführungsöffnung der gegenüberliegenden zweiten Stromschiene sowie eine weiterer Anschlussöffnung der zweiten Stromschiene und eine weitere Durchführungsöffnung der gegenüberliegenden ersten Stromschiene. Ein erster Anschlussbolzen des elektrischen Bauteils kann durch die zweite Stromschiene geführt und mit der Anschlussöffnung der ersten Stromschiene mechanisch und elektrisch verbunden werden, ein zweiter Anschlussbolzen des elektrischen Bauteils kann durch die weitere Durchführungsöffnung der ersten Stromschiene geführt und mit der weiteren Anschlussöffnung der zweiten Stromschiene mechanisch und elektrisch verbunden werden.

Um einen Spannungsüberschlag zwischen beispielsweise dem mit der Anschlussöffnung der ersten Stromschiene verbundenen ersten Anschlussbolzen und der Durchlassöffnung der zweiten Stromschiene zu verhindern, wird oft die Durchlassöffnung der zweiten Stromschiene im Gegensatz zur Anschlussöffnung der ersten Stromschiene überdimensioniert groß gewählt, damit die elektrisch isolierende Folie eine ausreichend isolierende Wirkung erreichen kann.

Insbesondere die vorsorglich groß gewählten Durchlassöffnungen schwächen an diesen Stellen die Leitfähigkeit der Stromschienen durch Reduzierung des leitfähigen Materials und damit verbunden die Erhöhung des elektrischen Widerstands in den Stromschienen. Elektrische Verluste an den Stromschienen, welche sich insbesondere negativ auf den Wirkungsgrad, die Verfügbarkeit bzw. die Lebensdauer der Stromschienen und der mit den Stromschienen verbundenen elektrischen Bauteile auswirken können, sind unter diesen Bedingungen systemimmanent und nur bei großzügiger bzw. überdimensionierter Auslegung der Stromschienen, der elektrischen Anschlüsse und ggf. auch der an die Stromschienen angeschlossenen elektrischen Bauteile wirtschaftlich und technisch in akzeptablen Grenzen zu halten.

Mittels der EP 1 120 895 A2 wird ein klein dimensioniertes Kondensatormodul zur Verwendung in einem Wechselrichter bereitgestellt, welches das Auftreten unerwünschter Induktivitäts-Komponenten in einem elektrischen Leiter unterdrücken kann und das für den Einsatz von großen Strömen geeignet ist. Das Kondensatormodul wird gebildet durch: das Befestigen einer Vielzahl von Keramikkondensatoren mit ersten und zweiten Anschlüssen auf der ersten Oberfläche eines Substrats; durch das Ausbilden eines ersten Leiters auf der ersten Oberfläche des Substrats; durch das Ausbilden eines zweiten Leiters auf der zweiten Oberfläche des Substrats; durch die jeweilige elektrische Verbindung der ersten und zweiten Anschlüsse mit dem ersten Leiter und dem zweiten Leiter; durch die Bildung eines ersten und eines zweiten Montageanschlusses auf dem Substrat, an denen die jeweiligen ersten und zweiten Anschlüsse eines Schaltmoduls angeschlossen sind und durch das jeweilige elektrische Verbinden des ersten und des zweiten Montageanschlusses mit dem ersten bzw. dem zweiten Leiter.

Der Erfindung liegt die Aufgabe zugrunde eine Vorrichtung zur elektrischen Verbindung von elektrischen Bauelementen mit Stromschienen bereitzustellen, welche besonders platzsparend ausgebildet ist und dennoch einen verbesserten Schutz gegenüber Spannungsüberschlägen aufweist.

Der Erfindung liegt die Erkenntnis zugrunde, dass für elektrische Anschlüsse mit unterschiedlichen Potentialen an besonders kompakt und platzsparend ausgelegten Stromschienen, welche im Betrieb eine hohe elektrische Leistung übertragen, in besonderer Art und Weise Luft- und Kriechstrecken bei der Auslegung dieser elektrischen Anschlüssen berücksichtigt werden müssen, um Spannungsüberschläge und deren zerstörerische Wirkung zu verhindern.

Die Aufgabe wird durch eine Vorrichtung mit den in Patentanspruch 1 angegebenen Merkmalen gelöst. Ferner wird die Aufgabe durch einen Stromrichter mit den in Patentanspruch 13 angegebenen Merkmalen gelöst.

Erfindungsgemäß wird eine Vorrichtung mit einer ersten und einer zweiten Stromschiene und einem Isolationsmittel zur elektrischen Verbindung mit mindestens einem elektrischen Bauelement vorgeschlagen, wobei die erste und die zweite Stromschiene im elektrischen Betrieb zueinander ein unterschiedliches Potential aufweisen, wobei das Isolationsmittel zwischen der ersten und der zweiten Stromschiene angeordnet ist und eine erste und zweite Isolationsmittelöffnung aufweist, wobei die erste Stromschiene eine erste Stromschienenöffnung, vorgesehen als ein erster elektrischer Anschluss, und eine zweite Stromschienenöffnung aufweist, wobei die zweite Stromschiene eine dritte Stromschienenöffnung, vorgesehen als ein zweiter elektrischer Anschluss, und eine vierte Stromschienenöffnung aufweist, wobei die erste Isolationsmittelöffnung, die erste Stromschienenöffnung und die vierte Stromschienenöffnung sich überlappen und wobei die zweite Isolationsmittelöffnung, die dritte Stromschienenöffnungen und die zweite Stromschienenöffnungen sich überlappen.

Die Vorrichtung ist dadurch gekennzeichnet, dass das Isolationsmittel eine erste Öffnungsbegrenzung der ersten Isolationsmittelöffnung aufweist, welche in die vierte Stromschienenöffnung der zweiten Stromschiene ragt, und dass das Isolationsmittel eine zweite Öffnungsbegrenzung der zweiten Isolationsmittelöffnung aufweist, welche in die zweite Stromschienenöffnung der ersten Stromschiene ragt.

Das Isolationsmittel ist ausgebildet, die erste Stromschiene elektrisch von der zweiten Stromschiene zu isolieren.

Mittels der ersten Stromschienenöffnung der ersten Stromschiene, vorgesehen als erster elektrischer Anschluss, und der dritten Stromschienenöffnung der zweiten Stromschiene, vorgesehen als zweiter elektrischer Anschluss, kann eine elektrische Verbindung der Stromschienen mit dem mindestens einen elektrischen Bauelement über Anschlusselemente des mindestens einen elektrischen Bauelements erfolgen.

Das Hineinragen der ersten Öffnungsbegrenzung der ersten Isolationsmittelöffnung des Isolationsmittels in die vierte Stromschienenöffnung der zweiten Stromschiene und das Hineinragen der zweiten Öffnungsbegrenzung der zweiten Isolationsmittelöffnung des Isolationsmittels in die zweite Stromschienenöffnung der ersten Stromschiene ermöglicht konstruktiv jeweils eine vorteilhafte Abstandsverkürzung zwischen den elektrischen Anschlüssen der Stromschienen gegenüber bisherigen Lösungen.

Durch das Hineinragen der jeweiligen Öffnungsbegrenzungen in die Stromschienen werden Kriechstrecken über das Isolationsmittel zwischen der ersten Stromschienenöffnung der ersten Stromschiene und der vierten Stromschienenöffnung der zweiten Stromschiene und über das Isolationsmittel zwischen der dritten Stromschienenöffnung der zweiten Stromschiene und der zweiten Stromschienenöffnung der ersten Stromschiene ausreichend bemessen, so dass Spannungsüberschläge an diesen Kriechstrecken zwischen den beschriebenen Stromschienenöffnungen der Stromschienen vorteilhaft vermeidbar sind.

Vorteilhafte Ausgestaltungsformen der Vorrichtung sind in den abhängigen Ansprüchen angegeben.

Bei einer ersten vorteilhaften Ausgestaltungsform der erfindungsgemäßen Vorrichtung weist die vierte Stromschienenöffnung an der vom Isolationsmittel abgewandten ersten Seite der zweiten Stromschiene eine erste Kante auf, wobei die erste Öffnungsbegrenzung sich mindestens auf die Höhe der ersten Kante erstreckt und/oder weist die zweite Stromschienenöffnung an der vom Isolationsmittel abgewandten zweiten Seite der ersten Stromschiene eine zweite Kante auf, wobei die zweite Öffnungsbegrenzung sich mindestens auf die Höhe der zweiten Kante erstreckt.

Bei einer weiteren vorteilhaften Ausgestaltungsform der erfinderischen Vorrichtung erstreckt sich die erste Öffnungsbegrenzung über die erste Kante und/oder erstreckt sich die zweite Öffnungsbegrenzung über die zweite Kante.

Das Erstrecken der Öffnungsbegrenzungen des Isolationsmittels bis auf die erste Kante der vierten Stromschienenöffnung der zweiten Stromschiene und/oder bis auf die zweite Kante der zweiten Stromschienenöffnung der ersten Stromschiene, insbesondere auch das Erstrecken des Isolationsmittels darüber hinaus, gewährt für die elektrische Verbindung von mindestens einem elektrischen Bauelement mit den Stromschienen in vorteilhafter Weise einen verbesserten Schutz gegen Spannungsüberschläge. Der Abstand der elektrischen Anschlüsse untereinander kann weiter reduziert werden.

Das Isolationsmittel kann ferner eine oder mehrere mechanische Befestigung aufweisen, mittels der die erfindungsgemäße Vorrichtung mechanisch beispielsweise an oder in einem Stromrichter befestigbar ist.

Ist die Verringerung des Abstands hingegen aus konstruktiven Gründen nicht vorgesehen, können die vierte Stromschienenöffnung der zweiten Stromschiene und/oder die zweite Stromschienenöffnung der ersten Stromschiene derart ausgelegt werden, dass, im Gegensatz zu bekannten Lösungen mit größeren Luft- bzw. Kriechstrecken über das Isolationsmittel, an der zweiten und/oder der vierten Stromschienenöffnungen mehr elektrisch leitfähiges Material in die jeweiligen Stromschienen eingebracht wird. Dadurch wird um die zweite und die vierte Stromschienenöffnungen herum eine Querschnittserhöhung des leitfähigen Materials der Stromschienen erzielt, was deren elektrischen Widerstand vermindert, somit deren elektrische Leitfähigkeit erhöht und deren elektrische Verluste reduziert.

Bei einer weiteren vorteilhaften Ausgestaltungsform der erfindungsgemäßen Vorrichtung weisen die Öffnungsbegrenzungen der Isolationsmittelöffnungen des Isolationsmittels jeweils eine Sicke auf.
Diese Sicken, welche in den Öffnungsbegrenzungen der Isolationsmittelöffnungen beispielsweise als offener Graben auslegbar sind, verbessern eine elektrisch isolierende Wirkung an den Kriechstrecken des Isolationsmittels zwischen der ersten Stromschienenöffnung der ersten Stromschiene und der vierten Stromschienenöffnung der zweiten Stromschiene ebenso wie zwischen der zweiten Stromschienenöffnung der ersten Stromschiene und der dritten Stromschienenöffnung der zweiten Stromschiene, wobei sich jeweils über den Kriechstrecken bildende Luftstrecken im Vergleich zu bisherigen Lösungen erheblich verkürzbar sind.

Bei einer weiteren vorteilhaften Ausgestaltungsform der erfindungsgemäßen Vorrichtung ist die erste Isolationsmittelöffnung größer als die erste Stromschienenöffnung und ist die zweite Isolationsmittelöffnung größer als die dritte Stromschienenöffnung.

Meist kommen als Anschlusselemente von elektrischen Bauelementen Anschlussbolzen für die elektrische Verbindung und üblicher Weise auch für eine mechanische Verbindung der elektrischen Bauelemente mit den Stromschienen zum Einsatz, welche beispielsweise durch die erste Stromschienenöffnung der ersten Stromschiene und der dritten Stromschienenöffnung der zweiten Stromschiene führbar sind, wobei diese Stromschienenöffnungen bzgl. ihres Durchmessers oft nach den Anschlussbolzen dimensioniert werden.

Sind zur Befestigung der Anschlussbolzen an die elektrischen Anschlüsse der Stromschienen als Befestigungsmittel beispielsweise Befestigungsmuttern vorgesehen, weisen diese Befestigungsmuttern üblicherweise einen größeren Umfang als den Durchmesser der Anschlussbolzen auf. Ist zumindest eine der Befestigungsmuttern derart zur Befestigung mit einem der Anschlussbolzen vorgesehen, dass sie durch die erste Isolationsmittelöffnung oder die zweite Isolationsmittelöffnung geführt werden soll, sind in vorteilhafter Weise die jeweiligen Isolationsmittelöffnungen des Isolationsmittels größer ausgelegt als die erste Stromschienenöffnung der ersten Stromschiene und/oder die dritte Stromschienenöffnung der zweiten Stromschiene.

Bei einer weiteren vorteilhaften Ausgestaltungsform der erfindungsgemäßen Vorrichtung erstreckt sich das Isolationsmittel vollständig über seine, den Stromschienen zugewandten Flächen und ist das Isolationsmittel einstückig ausgebildet.

Das einstückig ausgebildete Isolationsmittel ist insbesondere für eine vergleichsweise einfache und schnelle Montage mit den Stromschienen geeignet. Da es sich vollständig über seine, den Stromschienen zugewandten Flächen erstreckt, ist eine Isolationswirkung über diese Flächen bzgl. Verhinderung von Spannungsüberschlägen besonders vorteilhaft.

Bei einer weiteren vorteilhaften Ausgestaltungsform der erfindungsgemäßen Vorrichtung liegt zwischen der ersten Stromschiene und der zweiten Stromschiene ein Isolationsraum zur elektrischen Isolation der beiden Stromschienen vor, wobei das Isolationsmittel als ein separates Einlegeelement innerhalb des Isolationsraums ausgebildet ist und wobei das Isolationsmittel mit einem weiteren Isolationsmittel innerhalb des Isolationsraums in unmittelbarer Verbindung steht.

Der Vorteil des separaten Einlegeelements kommt insbesondere dann zum Tragen, wenn das Isolationsmittel beispielsweise im Rahmen von Service- oder Wartungsmaßnahmen zum Austausch vorgesehen ist. Das Isolationsmittel überdeckt bei dieser Ausgestaltung der erfindungsgemäßen Vorrichtung nur einen Teil des Isolationsraums, was ein Entfernen und ein Wiedereinsetzen des abgegrenzten Einlegelements als Isolationsmittel vorteilhaft vereinfacht.

Denkbar ist auch eine Anordnung von einem ersten separaten Einlegeteil an der ersten Isolationsmittelöffnung und einem zweiten separaten Einlegeteil an der zweiten Isolationsmittelöffnung, wobei das erste separate Einlegeteil und das zweite separate Einlegeteil geeignet sind, mittels eines elektrisch isolierenden Verbinders das separate Einlegeelement auszubilden.

Bei einer weiteren vorteilhaften Ausgestaltungsform der erfindungsgemäßen Vorrichtung ist das weitere Isolationsmittel eine einlagige oder mehrlagige Folie.

Derartige Folien oder Folienanordnungen, welche zur elektrischen Isolation zwischen der ersten und der zweiten Stromschiene für bestehende Lösungen einsetzt werden, sind nunmehr vorteilhaft dafür vorgesehen, den Isolationsraum zwischen den Stromschienen in Kombination mit dem separaten Einlegeelement oder dem ersten und zweiten separaten Einlegeteil als separatem Einlegeelement auszubilden.

Bei einer weiteren vorteilhaften Ausgestaltungsform der erfindungsgemäßen Vorrichtung sind die elektrischen Anschlüsse dazu vorgesehen, die Stromschienen mit einem Kondensator als elektrisches Bauelement und/oder einem Leistungshalbleitermodul als elektrisches Bauelement elektrisch zu verbinden.

Bei einer weiteren vorteilhaften Ausgestaltungsform der erfindungsgemäßen Vorrichtung weist die erste Stromschienenöffnung als erster elektrischer Anschluss der ersten Stromschiene eine trichterförmige Einpressung auf und/oder weist die dritte Stromschienenöffnung als zweiter elektrischer Anschluss der zweiten Stromschiene eine trichterförmige Einpressung auf.

Mittels trichterförmiger Einpressungen kann in vorteilhafter Weise auf spezifische Anforderungen von Herstellern elektrischer Bauelemente an konstruktive Merkmale der elektrischen Verbindung mit den Stromschienen reagiert werden. So können bauliche Unterschiede zwischen Anschlusselementen (beispielsweise Anschlussbolzen) der elektronischen Bauelemente durch die trichterförmige Einpressung an den elektrischen Anschlüssen ausgeglichen werden.
Bei einer weiteren vorteilhaften Ausgestaltungsform der erfindungsgemäßen Vorrichtung liegt die dritte Stromschienenöffnung in einer Anschlussebene mit der ersten Stromschienenöffnung.

Die Bildung dieser Anschlussebene erlaubt einen technisch effizienteren Einsatz der erfindungsgemäßen Vorrichtung, ggf. auch verbunden mit daraus resultierenden Kostenvorteilen, da insbesondere elektrische Bauteile mit standardisierten bzw. genormten Anschlusselemente für die elektrische Verbindung mit den Stromschienen zum Einsatz kommen können und damit Verbindungsprobleme durch verschiedene Arten von Anschlusselementen bei den elektrischen Bauteilen reduzierbar sind.

Bei einer weiteren vorteilhaften Ausgestaltungsform der erfindungsgemäßen Vorrichtung ist die trichterförmige Einpressung in Richtung des Isolationsmittels ausgebildet und/oder ist die weitere trichterförmige Einpressung in Richtung des Isolationsmittels ausgebildet.

Diese Ausgestaltungsform erlaubt ebenfalls vorteilhaft den Ausgleich von baulichen Unterschieden zwischen den Anschlusselementen (beispielsweise von Anschlussbolzen) der elektronischen Bauelemente.

Für die Lösung der Aufgabe wird ferner ein Stromrichter mit einer erfindungsgemäßen Vorrichtung vorgeschlagen, umfassend einen Gleichspannungskreis mit der ersten Stromschiene und der zweiten Stromschiene, wobei im Betrieb des Stromrichters an der ersten Stromschiene das erste Potential und an der zweiten Stromschiene das zweite Potential anliegt und umfassend das mindestens eine elektrische Bauelement, welches mittels der elektrischen Anschlüsse elektrisch mit der ersten und der zweiten Stromschiene verbindbar ist.

Bei einer vorteilhaften Ausgestaltungsform des Stromrichters ist das mindestens eine elektrische Bauelement ein Kondensator und/oder ein Leistungshalbleitermodul.
Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Es zeigt:
- FIG 1: eine erste schematische Darstellung der erfindungsge-mäßen Vorrichtung zur elektrischen Verbindung von mindestens einem elektrischen Bauelement mit einer ersten und zweiten Stromschiene und einem Isolations-mittel zwischen den Stromschienen,
- FIG 2: eine zweite schematische Darstellung der Vorrichtung nach FIG 1 mit einem separaten Einlegeelement als Isolationsmittel, und
- FIG 3: eine schematische Darstellung eines Stromrichters mit der erfindungsgemäßen Vorrichtung nach FIG 1 und FIG 2.

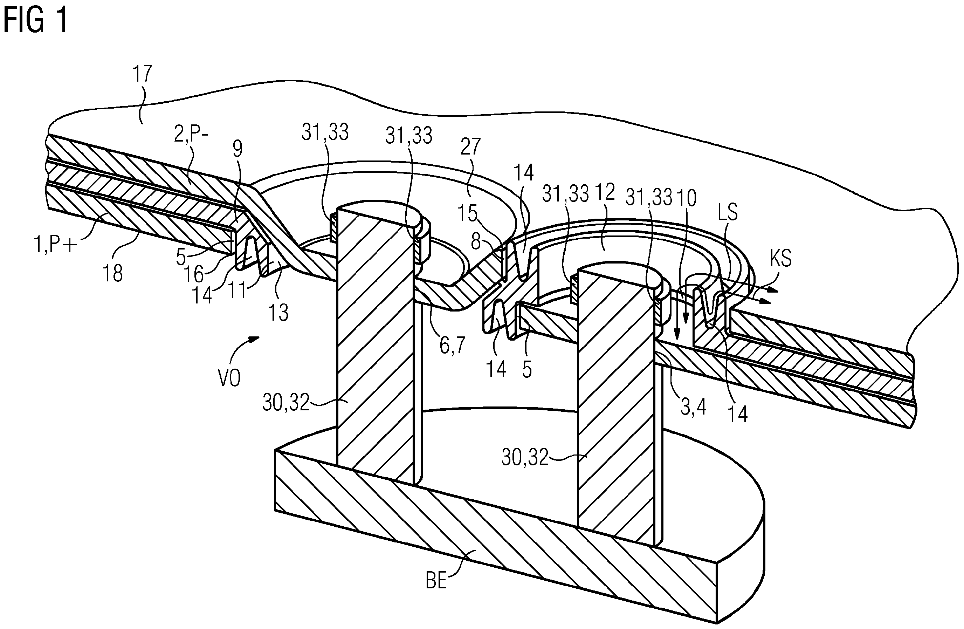

FIG 1 zeigt die erfindungsgemäße Vorrichtung VO zum elektrischen Verbinden von mindestens einem elektrischen Bauelement BE mit einer ersten und zweiten Stromschiene 1, 2. Im elektrischen Betrieb weisen die beiden Stromschienen 1, 2 zueinander ein unterschiedliches Potential P+, P- auf. Zwischen der der ersten und der zweiten Stromschiene 1, 2 ist ein Isolationsmittel 9 angeordnet, welches eine erste und zweite Isolationsmittelöffnung 10, 11 aufweist. Dieses Isolationsmittel 9 hat die Aufgabe, die beiden Stromschienen 1, 2 gegeneinander elektrisch zu isolieren.

An der ersten Stromschiene 1 ist eine erste Stromschienenöffnung 3, vorgesehen als ein erster elektrischer Anschluss 4, und eine zweite Stromschienenöffnung 5 angeordnet. An der zweiten Stromschiene 2 ist eine dritte Stromschienenöffnung 6, vorgesehen als ein zweiter elektrischer Anschluss 7, und eine vierte Stromschienenöffnung 8 angeordnet. Die erste Isolationsmittelöffnung 10, die erste Stromschienenöffnung 3 und die vierte Stromschienenöffnung 8 überlappen sich ebenso wie die zweite Isolationsmittelöffnung 11, die dritte Stromschienenöffnungen 6 und die zweite Stromschienenöffnungen 5.

Das Isolationsmittel 9 weist eine erste Öffnungsbegrenzung 12 der ersten Isolationsmittelöffnung 10 auf, welche in die vierte Stromschienenöffnung 8 der zweiten Stromschiene 2 ragt. Darüber hinaus weist das Isolationsmittel 9 eine zweite Öffnungsbegrenzung 13 der zweiten Isolationsmittelöffnung 11 auf, welche in die zweite Stromschienenöffnung 5 der ersten Stromschiene 1 ragt.

Die vierte Stromschienenöffnung 8 weist an der vom Isolationsmittel 9 abgewandten ersten Seite 17 der zweiten Stromschiene 2 eine erste Kante 15 auf, wobei sich die erste Öffnungsbegrenzung 12 über die erste Kante 15 erstreckt. Ferner weist die zweite Stromschienenöffnung 5 an der vom Isolationsmittel 9 abgewandten zweiten Seite 18 der ersten Stromschiene 1 eine zweite Kante 16 auf, wobei sich die zweite Öffnungsbegrenzung 13 über die zweite Kante 16 erstreckt.

An beiden Öffnungsbegrenzungen 12, 13 der Isolationsmittelöffnungen 10, 11 des Isolationsmittels 9 sind Sicken 14 in Form von offenen Gräben ausgebildet.

Über die Sicken 14 des Isolationsmittels 9 hinweg ist eine Kriechstrecke KS zwischen der ersten Stromschienenöffnung 3 der ersten Stromschiene 1 und der vierten Stromschienenöffnung 8 der zweiten Stromschiene 2 angedeutet. Diese Kriechstrecke KS des Isolationsmittels 9 müsste einen Spannungsüberschlag überwinden, bevor ein Schaden entstehen kann. Im Vergleich zur Kriechstrecke KS ist die Luftstrecke LS signifikant kürzer. Diese Luftstrecke LS muss im Falle eines Spannungsüberschlags ebenfalls überwunden werden.

Im Beispiel der FIG 1 wird aufgezeigt, dass die erste Isolationsmittelöffnung 10 größer ist als die erste Stromschienenöffnung 3 und die zweite Isolationsmittelöffnung 11 größer ist als die dritte Stromschienenöffnung 6.

Die Anschlusselemente 30 sind als Anschlussbolzen 32 des elektrischen Bauelements BE für dessen elektrische Verbindung mit den Stromschienen 1, 2 ausgeführt. Die Anschlusselemente 30 sind durch die erste Stromschienenöffnung 3 der ersten Stromschiene 1 und die dritte Stromschienenöffnung 6 der zweiten Stromschiene 2 geführt. Zur Befestigung der Anschlusselemente 30, also der Anschlussbolzen 32 an die elektrischen Anschlüsse 4, 7 der Stromschienen 1, 2 sind Befestigungselemente 31 vorgesehen, welche in FIG 1 als Befestigungsmuttern 33 ausgeführt sind.

Derartige Befestigungsmuttern 33 zur Befestigung der Anschlussbolzen 32 an den Stromschienen 1, 2 werden in ihrem Durchmesser erfahrungsgemäß größer bemessen als die Anschlussbolzen 32. Eine der Befestigungsmuttern 33 wird durch die erste Isolationsmittelöffnung 10 des Isolationsmittels 9 geführt. Die erste Isolationsmittelöffnung 10 ist daher größer ausgelegt als die erste Stromschienenöffnung 3 der ersten Stromschiene 1.

Das Isolationsmittel 9 erstreckt sich in FIG 1 vollständig über seine den Stromschienen 1, 2 zugewandten Flächen. Ferner ist das Isolationsmittel 9 einstückig ausgebildet.

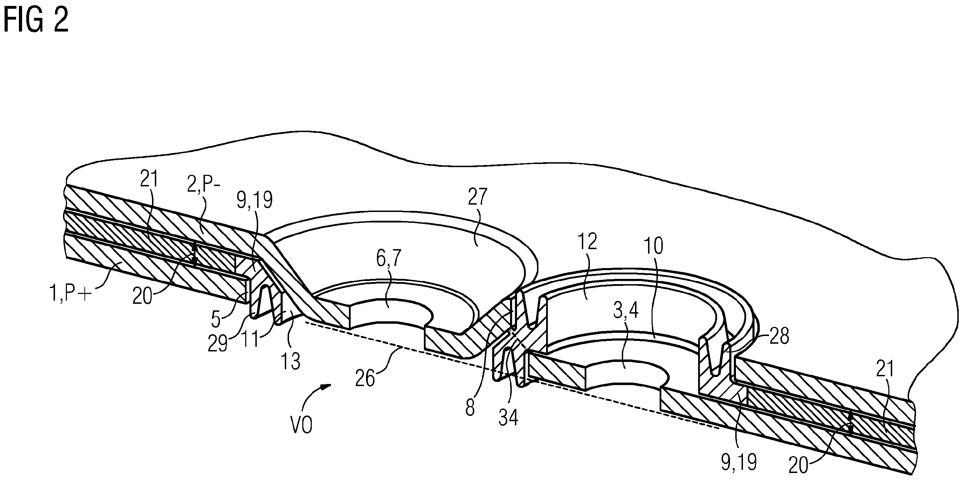

FIG 2 visualisiert ein Beispiel der erfindungsgemäßen Vorrichtung VO auf Basis von FIG 1. Zwischen der ersten Stromschiene 1 und der zweiten Stromschiene 2 liegt ein Isolationsraum 20 zur elektrischen Isolation der beiden Stromschienen 1, 2. Innerhalb des Isolationsraums 20 ist das Isolationsmittel 9 als ein separates Einlegeelement 19 ausgebildet. Ferner steht das Isolationsmittel 9 mit einem weiteren Isolationsmittel 21 innerhalb des Isolationsraums 20 in unmittelbarer Verbindung.

Das Isolationsmittel 9 in FIG 2 nimmt nur einen vergleichsweise kleinen Teil des Isolationsraums 20 ein, was ein Entfernen und ein Wiedereinsetzen des separaten Einlegelements 19 einfacher gestaltet als wenn das Isolationsmittel 9 wie in FIG 1 aufgezeigt einstückig ausgebildet ist.

Ein erstes separates Einlegeteil 28 an der ersten Isolationsmittelöffnung 10 kann gemeinsam mit einem zweiten separaten Einlegeteil 29 an der zweiten Isolationsmittelöffnung 11 das separate Einlegeelement 19 bilden, wobei mittels eines elektrisch isolierenden Verbinders 34 beide separaten Einlegeteile 28, 29 mechanisch zum separaten Einlegeelement 19 verbindbar sind.

Der elektrisch isolierende Verbinder 34 ist derart ausgebildet, dass seine elektrisch isolierende Wirkung vergleichbar mit jedem der separaten Einlegeteile 28, 29 oder dem separaten Einlegeelement 19 ist.

Sowohl FIG 1 wie auch FIG 2 zeigen jeweils an ihrer dritten Stromschienenöffnung 6 als zweiten elektrischen Anschluss 7 der zweiten Stromschiene 2 eine trichterförmige Einpressung 27. Die trichterförmige Einpressung 27 ist dabei jeweils in Richtung des Isolationsmittels 9 ausgebildet. Mittels der trichterförmigen Einpressungen 27 kann beispielsweise ein baulicher Unterschied zwischen den beiden Anschlusselementen 30 (den beiden Anschlussbolzen 32) der elektronischen Bauelemente BE ausgeglichen werden.

FIG 2 zeigt ferner eine Anschlussebene 26, auf welcher die erste Stromschienenöffnung 3 der ersten Stromschiene 1 und die dritte Stromschienenöffnung 6 der zweiten Stromschiene 2 gemeinsam angeordnet sind.

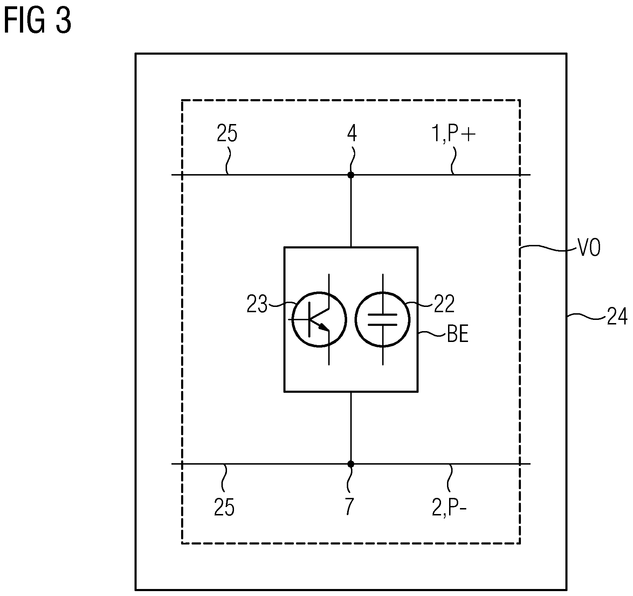

In FIG 3 wird ein Stromrichter 24 mit einer erfindungsgemäßen Vorrichtung VO gezeigt, welche an einem Gleichspannungskreis 25 des Stromrichters 24 betrieben wird. An einer ersten Stromschiene 1 im Gleichspannungskreis 25 liegt im Betrieb ein erstes Potential P+ an und an einer zweiten Stromschiene 2 des Gleichspannungskreises 25 liegt im Betrieb ein zweites Potential P- an. Mindestens ein elektrisches Bauelement BE ist mittels elektrischer Anschlüsse 4, 7 mit der ersten und der zweiten Stromschiene 1, 2 elektrisch verbunden.

Das mindestens eine mit den Stromschienen 1, 2 elektrisch verbundene elektrische Bauelement BE ist ein Kondensator 22 und/oder ein Leistungshalbleitermodul 23.

## Patentansprüche

1. Vorrichtung (VO) mit einer ersten und einer zweiten Stromschiene (1, 2) und einem Isolationsmittel (9) zur elektrischen Verbindung mit mindestens einem elektrischen Bauelement (BE), wobei:
- die erste und die zweite Stromschiene (1, 2) im elektrischen Betrieb zueinander ein unterschiedliches Potential (P+, P-) aufweisen,
- das Isolationsmittel (9) zwischen der ersten und der zweiten Stromschiene (1, 2) angeordnet ist und eine erste und zweite Isolationsmittelöffnung (10, 11) aufweist,
- die erste Stromschiene (1) eine erste Stromschienenöffnung (3), vorgesehen als ein erster elektrischer Anschluss (4), und eine zweite Stromschienenöffnung (5) aufweist,
- die zweite Stromschiene (2) eine dritte Stromschienenöffnung (6), vorgesehen als ein zweiter elektrischer Anschluss (7), und eine vierte Stromschienenöffnung (8) aufweist,
- die erste Isolationsmittelöffnung (10), die erste Stromschienenöffnung (3) und die vierte Stromschienenöffnung (8) sich überlappen und
- die zweite Isolationsmittelöffnung (11), die dritte Stromschienenöffnungen (6) und die zweite Stromschienenöffnungen (5) sich überlappen,
**dadurch gekennzeichnet, dass**
- das Isolationsmittel (9) eine erste Öffnungsbegrenzung (12) der ersten Isolationsmittelöffnung (10) aufweist, welche in die vierte Stromschienenöffnung (8) der zweiten Stromschiene (2) ragt und
- das Isolationsmittel (9) eine zweite Öffnungsbegrenzung (13) der zweiten Isolationsmittelöffnung (11) aufweist, welche in die zweite Stromschienenöffnung (5) der ersten Stromschiene (1) ragt.

2. Vorrichtung (VO) nach Anspruch 1,
wobei die vierte Stromschienenöffnung (8) an der vom Isolationsmittel (9) abgewandten ersten Seite (17) der zweiten Stromschiene (2) eine erste Kante (15) aufweist, wobei die erste Öffnungsbegrenzung (12) sich mindestens auf die Höhe der ersten Kante (15) erstreckt und/oder wobei die zweite Stromschienenöffnung (5) an der vom Isolationsmittel (9) abgewandten zweiten Seite (18) der ersten Stromschiene (1) eine zweite Kante (16) aufweist, wobei die zweite Öffnungsbegrenzung (13) sich mindestens auf die Höhe der zweiten Kante (16) erstreckt.

3. Vorrichtung (VO) nach Anspruch 2,
wobei die erste Öffnungsbegrenzung (12) sich über die erste Kante (15) erstreckt und/oder die zweite Öffnungsbegrenzung (13) sich über die zweite Kante (16) erstreckt.

4. Vorrichtung VO nach einem der vorhergehenden Ansprüche,
wobei die Öffnungsbegrenzungen (12, 13) der Isolationsmittelöffnungen (10, 11) des Isolationsmittels (9) jeweils eine Sicke (14) aufweisen.

5. Vorrichtung (VO) nach einem der vorhergehenden Ansprüche,
wobei die erste Isolationsmittelöffnung (10) größer als die erste Stromschienenöffnung (3) ist und die zweite Isolationsmittelöffnung (11) größer als die dritte Stromschienenöffnung (6) ist.

6. Vorrichtung (VO) nach einem der vorhergehenden Ansprüche,
wobei sich das Isolationsmittel (9) vollständig über seine, den Stromschienen (1, 2) zugewandten Flächen erstreckt und das Isolationsmittel (9) einstückig ausgebildet ist.

7. Vorrichtung (VO) nach einem der Ansprüche 1 bis 5,
wobei zwischen der ersten Stromschiene (1) und der zweiten Stromschiene (2) ein Isolationsraum (20) zur elektrischen Isolation der beiden Stromschienen (1, 2) vorliegt, wobei das Isolationsmittel (9) als ein separates Einlegeelement (19) innerhalb des Isolationsraums (20) ausgebildet ist und wobei das Isolationsmittel (9) mit einem weiteren Isolationsmittel (21) innerhalb des Isolationsraums (20) in unmittelbarer Verbindung steht.

8. Vorrichtung (VO) nach Anspruch 7,
wobei das weitere Isolationsmittel (21) eine einlagige oder mehrlagige Folie ist.

9. Vorrichtung (VO) nach einem der vorhergehenden Ansprüche,
wobei die elektrischen Anschlüsse (4, 7) dazu vorgesehen sind, die Stromschienen (1, 2) mit einem Kondensator (22) als elektrisches Bauelement (BE) und/oder mit einem Leistungshalbleitermodul (23) als elektrisches Bauelement (BE) elektrisch zu verbinden.

10. Vorrichtung (VO) nach einem der vorhergehenden Ansprüche,
wobei die erste Stromschienenöffnung (3) als erster elektrischer Anschluss (4) der ersten Stromschiene (1) eine trichterförmige Einpressung (27) aufweist und/oder wobei die dritte Stromschienenöffnung (6) als zweiter elektrischer Anschluss (7) der zweiten Stromschiene (2) eine trichterförmige Einpressung (27) aufweist.

11. Vorrichtung (VO) nach Anspruch 10,
wobei die dritte Stromschienenöffnung (6) in einer Anschlussebene (26) mit der ersten Stromschienenöffnung (3) liegt.

12. Vorrichtung (VO) nach einem der Ansprüche 10 oder 11,
wobei die trichterförmige Einpressung (27) in Richtung des Isolationsmittels (9) ausgebildet ist.

13. Stromrichter (24), mit einer Vorrichtung (VO) nach einem der Ansprüche 1 bis 12, umfassend:
- einen Gleichspannungskreis (25) mit der ersten Stromschiene (1) und der zweiten Stromschiene (2), wobei im Betrieb des Stromrichters (24) an der ersten Stromschiene (1) das erste Potential (P+) und an der zweiten Stromschiene (2) das zweite Potential (P-) anliegt und
- das mindestens eine elektrische Bauelement (BE), welches mittels der elektrischen Anschlüsse (4, 7) elektrisch mit der ersten und der zweiten Stromschiene (1, 2) verbindbar ist.

14. Stromrichter (24) nach Anspruch 13,
wobei das mindestens eine elektrische Bauelement (BE) ein Kondensator (22) und/oder ein Leistungshalbleitermodul (23) ist.

## Claims

1. Apparatus (VO) having a first and a second busbar (1, 2) and an insulation means (9) for electrically connecting to at least one electrical component (BE), wherein:
- during electrical operation, the first and second busbar (1, 2) have a different potential (P+, P-) to one another,
- the insulation means (9) is arranged between the first and second busbar (1, 2) and has a first and a second insulation means opening (10, 11),
- the first busbar (1) has a first busbar opening (3), provided as a first electrical connection (4), and a second busbar opening (5),
- the second busbar (2) has a third busbar opening (6), provided as a second electrical connection (7), and a fourth busbar opening (8),
- the first insulation means opening (10), the first busbar opening (3) and the fourth busbar opening (8) overlap and
- the second insulation means opening (11), the third busbar openings (6) and the second busbar openings (5) overlap,
**characterised in that**
- the insulation means (9) has a first opening boundary (12) of the first insulation means opening (10), which projects into the fourth busbar opening (8) of the second busbar (2) and
- the insulation means (9) has a second opening boundary (13) of the second insulation means opening (11) which projects into the second busbar opening (5) of the first busbar (1).

2. Apparatus (VO) according to claim 1,
wherein the fourth busbar opening (8) has a first edge (15) on the first side (17) of the second busbar (2) facing away from the insulation means (9), wherein the first opening boundary (12) extends at least to the height of the first edge (15) and/or wherein the second busbar opening (5) has a second edge (16) on the second side (18) of the first busbar (1) facing away from the insulation means (9), wherein the second opening boundary (13) extends at least to the height of the second edge (16).

3. Apparatus (VO) according to claim 2,
wherein the first opening boundary (12) extends beyond the first edge (15) and/or the second opening boundary (13) extends beyond the second edge (16).

4. Apparatus (VO) according to one of the preceding claims,
wherein the opening boundaries (12, 13) of the insulation means openings (10, 11) of the insulation means (9) each have a bead (14).

5. Apparatus (VO) according to one of the preceding claims,
wherein the first insulation means opening (10) is larger than the first busbar opening (3) and the second insulation means opening (11) is larger than the third busbar opening (6).

6. Apparatus (VO) according to one of the preceding claims,
wherein the insulation means (9) extends completely beyond its surfaces facing toward the busbars (1, 2) and the insulation means (9) is formed as a single piece.

7. Apparatus (VO) according to one of claims 1 to 5,
wherein arranged between the first busbar (1) and the second busbar (2) is an insulation space (20) for electrical insulation of the two busbars (1, 2), wherein the insulation means (9) is configured as a separate insert element (19) within the insulation space (20) and wherein the insulation means (9) is directly connected to a further insulation means (21) within the insulation space (20).

8. Apparatus (VO) according to claim 7,
wherein the further insulation means (21) is a single-layered or multi-layered foil.

9. Apparatus (VO) according to one of the preceding claims,
wherein the electrical connections (4, 7) are provided to connect the busbars (1, 2) electrically to a capacitor (22) as an electrical component (BE) and/or to a power semiconductor module (23) as an electrical component (BE).

10. Apparatus (VO) according to one of the preceding claims,
wherein the first busbar opening (3) has as the first electrical connection (4) of the first busbar (1), a funnel-shaped impression (27) and/or wherein the third busbar opening (6) has a funnel-shaped impression (27) as the second electrical connection (7) of the second busbar (2).

11. Apparatus (VO) according to claim 10,
wherein the third busbar opening (6) is arranged in a connection plane (26) with the first busbar opening (3).

12. Apparatus (VO) according to one of claims 10 or 11,
wherein the funnel-shaped impression (27) is formed, in each case, in the direction of the insulation means (9).

13. Converter (24) with an apparatus (VO) according to one of claims 1 to 12, comprising:
- a DC circuit (25) with the first busbar (1) and the second busbar (2), wherein during the operation of the converter (24), the first potential (P+) is applied to the first busbar (1) and the second potential (P-) is applied to the second busbar (2), and
- the at least one electrical component (BE) which is electrically connectable by means of the electrical connections (4, 7) to the first and second busbars (1, 2).

14. Converter (24) according to claim 13,
wherein the at least one electrical component (BE) is a capacitor (22) and/or a power semiconductor module (23).

## Revendications

1. Dispositif (VO), comprenant un premier et un deuxième rails (1, 2) de contact et un moyen (9) isolant pour la connexion électrique à au moins un composant (BE) électrique, dans lequel :
- le premier et le deuxième rails (1, 2) de contact ont, en fonctionnement électrique l'un par rapport à l'autre, un potentiel (P+, P-) différent
- le moyen (9) isolant est disposé entre le premier et le deuxième rails (1, 2) de contact et a une première et une deuxième ouvertures (10, 11) de moyen isolant,
- le premier rail (1) de contact a une première ouverture (3) de rail de contact, comme première borne (4) électrique, et une deuxième ouverture (5) de rail de contact,
- le deuxième rail (2) de contact a une troisième ouverture (6) de rail de contact prévue comme deuxième borne (7) électrique et une quatrième ouverture (8) de rail de contact,
- la première ouverture (10) de moyen isolant, la première ouverture (3) de rail de contact et la quatrième ouverture (8) de rail de contact se chevauchent et
- la deuxième ouverture (11) de moyen isolant, les troisièmes ouvertures (6) de rail de contact et les deuxièmes ouvertures (5) de rail de contact se chevauchent et
**caractérisé en ce que**
- le moyen (9) isolant a une première démarcation (12) de la première ouverture (10) de moyen isolant, qui pénètre dans la quatrième ouverture (8) du deuxième rail (2) de contact et
- le moyen (9) isolant a une deuxième démarcation (13) de la deuxième ouverture (11) du moyen isolant, qui pénètre dans la deuxième ouverture (5) du premier rail (1) de contact.

2. Dispositif (VO) suivant la revendication 1,
dans lequel la quatrième ouverture (8) de rail de contact a, du premier côté (17), loin du moyen (9) isolant, du deuxième rail (2) de contact, un premier bord (15), dans lequel la première démarcation (12) d'ouverture s'étend au moins jusqu'au niveau du premier bord (15) et/ou dans lequel la deuxième ouverture (5) de rail de contact a, du deuxième côté (18), loin du moyen (9) isolant, du premier rail (1) de contact, un deuxième bord (16), la deuxième démarcation (13) d'ouverture s'étendant au moins jusqu'au niveau du deuxième bord (16).

3. Dispositif (VO) suivant la revendication 2,
dans lequel la première démarcation (12) d'ouverture s'étend sur le premier bord (15) et/ou la deuxième démarcation (13) d'ouverture s'étend sur le deuxième bord (16).

4. Dispositif (VO) suivant l'une des revendications précédentes,
dans lequel les démarcations (12, 13) des ouvertures (10, 11) du moyen (9) isolant ont chacune une nervure (14).

5. Dispositif (VO) suivant l'une des revendications précédentes,
dans lequel la première ouverture (10) du moyen isolant est plus grande que la première ouverture (13) de rail de contact et la deuxième ouverture (11) du moyen isolant est plus grande que la troisième ouverture (6) de rail de contact.

6. Dispositif (VO) suivant l'une des revendications précédentes,
dans lequel le moyen (9) isolant s'étend entièrement sur sa surface tournée vers les rails (1, 2) de contact et le moyen (9) isolant est constitué d'une seule pièce.

7. Dispositif (VO) suivant l'une des revendications 1 à 5,
dans lequel, entre le premier rail (1) de contact et le deuxième rail (2) de contact, il y a un espace (20) isolant pour isoler électriquement les deux rails (1, 2) de contact, le moyen (9) isolant étant constitué, sous la forme d'un élément (19) d'insertion distinct, à l'intérieur de l'espace (20) isolant, et dans lequel le moyen (9) isolant est en liaison directe, à l'intérieur de l'espace (20) isolant, avec un autre moyen (21) isolant.

8. Dispositif (VO) suivant la revendication 7,
dans lequel l'autre moyen (21) isolant est une feuille à une couche ou à plusieurs couches.

9. Dispositif (VO) suivant l'une des revendications précédentes,
dans lequel les bornes (4, 7) électriques sont prévues pour connecter électriquement les rails (1, 2) de contact à un condensateur (22), comme composant (BE) électrique, et/ou à un module (23) à semi-conducteur de puissance, comme composant (BE) électrique.

10. Dispositif (VO) suivant l'une des revendications précédentes,
dans lequel la première ouverture (3) de rail de contact a, comme première borne (4) électrique du premier rail (1) de contact, une empreinte (27) en forme de trémie et/ou dans lequel la troisième ouverture (6) de rail de contact a, comme deuxième borne (7) électrique du deuxième rail (2) de contact, une empreinte (27) en forme de trémie.

11. Dispositif (VO) suivant la revendication 10,
dans lequel la troisième ouverture (6) de rail de contact se trouve dans un plan (26) de connexion à la première ouverture (3) de rail de contact.

12. Dispositif (VO) suivant l'une des revendications 10 ou 11,
dans lequel l'empreinte (27) en forme de trémie est constituée en direction du moyen (9) isolant.

13. Convertisseur (24) de courant, ayant un dispositif (VO) suivant l'une des revendications 1 à 12, comprenant :
- un circuit (25) de tension continue ayant le premier rail (1) de contact et le deuxième rail (2) de contact, dans lequel, lorsque le convertisseur (24) de courant fonctionne, le premier potentiel (P+) s'applique au premier rail (1) de contact et le deuxième potentiel (P-) s'applique au deuxième rail (2) de contact et
- le au moins un composant (BE) électrique, qui, au moyen des bornes (4, 7) électriques, peut être connecté électriquement au premier et au deuxième rail (1, 2) de contact.

14. Convertisseur (24) de courant suivant la revendication 13,
dans lequel le au moins un composant (BE) électrique est un condensateur (22) et/ou un module (23) à semi-conducteur de puissance.
